# EUROPEAN PATENT SPECIFICATION

(11) **EP 2 498 359 B1**
(45) Date of publication and mention of the grant of the patent: **02.08.2017**
(21) Application number: 12157778.7
(22) Date of filing: 01.03.2012
(51) Int. Cl.: H02H 3/08

(54) **Circuit breaker trip unit**
Auslösereinheit für Schutzschalter
Unité de déclenchement de disjoncteur

(30) Priority: 02.03.2011 US 201113038706
(43) Date of publication of application: 12.09.2012
(73) Proprietor: General Electric Company, Schenectady, NY 12345 (US)
(72) Inventor: Williams, Craig Benjamin, Louisville, KY Kentucky 40225 (US); Cull, Zachary Herman, Louisville, KY Kentucky 40225 (US)
(74) Representative: Fischer, Jens Peter

(56) References cited:
- EP-A2- 0 949 733
- US-A- 5 311 392
- US-B1- 6 330 142

## Description

### BACKGROUND OF THE INVENTION

The subject matter disclosed herein relates to circuit breakers, and in particular to a circuit breaker having an electronic trip unit.

Circuit breaker trip units provide protection for cables, motors and other loads by measuring electrical current and controlling primary operation to protect against overheating of the cables, motors, and loads. One traditional approach to circuit breaker design uses bimetallic elements heated by current, another uses electronics to estimate heating as proportional to the current squared (I2R heating). Typically, a circuit breaker will also have a system for protecting against very high current levels such as short circuits for example using either a magnetically actuated latch and/or electronics that measure the current through the circuit breaker. In response to the opening of one of the circuit breakers, current is removed from the cables or loads to prevent overheating of the cables. In electronic trip unit applications, many of these protective devices derive operating power from the load current and will de-energize and re-initialize following an open-close operation, allowing a user to reset the circuit breaker immediately.

One type of electronic circuit breaker uses a microprocessor or ASIC based circuit to interrogate the measured current. In the event that an undesired condition is detected, the microprocessor transmits a signal to an electromechanical system that opens the circuit breaker and interrupts the flow of current. Some electronic circuit breakers have included fully redundant microprocessors that monitor the current data in parallel. EP 0 949 733 discloses an electronic trip unit. A first microprocessor controls overcurrent and instantaneous protection functions of the trip unit while a second microprocessor controls voltage based and metering functions. It should be appreciated that these redundant microprocessors provide total system redundancy and are not practical in all applications due to the cost of manufacture and physical space restrictions. Other circuit breakers incorporate a fixed RC circuit in parallel with the microprocessor as a means of redundancy. The RC circuit opens the circuit breaker after a fixed delay after the undesired condition is detected. The RC circuit treats all undesired conditions equally, regardless of the severity or loading profile.

While existing circuit breakers are suitable for their intended purpose, the art of circuit breakers may be advanced by providing a trip unit with a cost effective limited-functionality redundancy in the protection circuits.

### BRIEF DESCRIPTION OF THE INVENTION

The present invention provides a trip unit as defined in claim 1, a circuit breaker as defined in claim 13 and a method as defined in claim 14.

According to one embodiment of the invention, a trip unit for a circuit breaker having at least one sensor configured for monitoring a current in a protected circuit, and an electromechanical tripping system is provided. The trip unit includes the features of claim 1. According to another embodiment of the invention, a trip unit for a circuit breaker having a plurality of sensors configured for monitoring a current in a protected circuit, and an electromechanical tripping system. The trip unit includes a first controller that is electrically coupled to the plurality of sensors and the electromechanical tripping system, the first controller including a plurality of first A/D converters each disposed to receive a first signal from a respective one of the plurality of sensors, the first controller having a first processor and a first memory, the first processor being responsive to executable computer instructions for accumulating a first current data and storing the first current data in the first memory. A second controller is electrically coupled to the plurality of sensors and the electromechanical tripping system, the second controller includes a second A/D converter disposed to receive a second signal from each of the plurality of sensors, the second controller being electrically coupled to receive a third signal from the first memory, the second controller having a second processor and a second memory, the second processor being responsive to executable computer instructions for transmitting a fourth signal to the electromechanical tripping system after a predetermined first time period in response to the third signal indicating a first current condition.

According to yet another embodiment of the invention, a method of operating a circuit breaker is provided. The method includes providing at least one sensor configurable to monitor electric current in a protected circuit. An electromechanical tripping system is provided. An electronic trip unit is provided having a primary controller and a secondary controller, each controller being operably coupled, in parallel with each other, to the at least one sensor and the electromechanical tripping system, the primary controller having a first processor and the secondary controller having a second processor. A first signal is transmitted from the at least one sensor to the primary controller and the secondary controller, the first signal being indicative of a first current condition. The first current condition is detected with the secondary controller. The first current condition is classified. A predetermined first amount of time is waited, wherein the length of the predetermined first amount of time is determined by the classification of the first current condition. A second signal is transmitted with the secondary controller to the electromechanical tripping system upon expiration of the predetermined first amount of time.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a functional block diagram of a circuit breaker in accordance with an embodiment of the invention;
FIG 2 is a schematic block diagram of a circuit breaker in accordance with another embodiment of the invention;
FIG 3 is a current waveform diagram of a simulated fault condition for the circuit breaker of Figure 1 or Figure 2;
FIG. 4 is a schematic block diagram of a comparator for use in another embodiment of the invention;
FIG. 5 is a schematic block diagram of another comparator for use in another embodiment of the invention; and,
FIG. 6 is a flow diagram of a method of operator for a secondary protection controller having the comparator of Figure 4 or Figure 5.

The detailed description explains embodiments of the invention, together with advantages and features, by way of example with reference to the drawings.

### DETAILED DESCRIPTION OF EMBODIMENTS OF THE INVENTION

Circuit breakers include a subsystem referred to as a trip unit that monitors the current on the protected circuit and initiates the opening of the circuit breaker contacts in the event that a fault condition, such as an overload or short circuit condition is detected. Embodiments of the present invention provide advantages in providing a trip unit having a primary protection controller and a secondary protection controller to provide a redundant fault detection system. Embodiments of the present invention provide further advantages by including a secondary controller having reduced functionality and lower cost. Embodiments of the present invention provide yet further advantages in notifying the operator if the secondary controller activated the circuit breaker so that preventive maintenance may be performed.

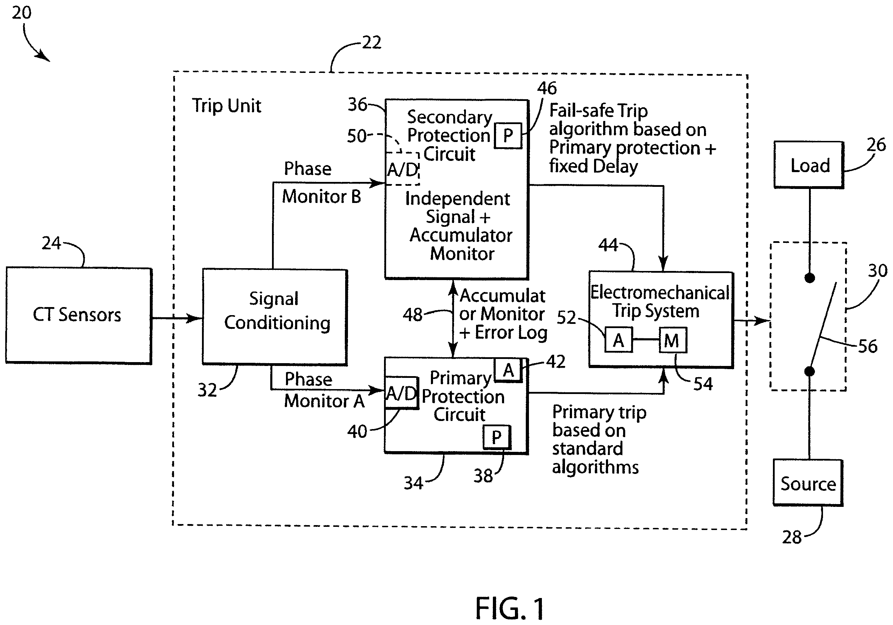

Referring to Figure 1, an embodiment of a circuit breaker 20 is shown having a trip unit 22. The trip unit 22 is connected to receive a signal from a current sensor, such as current transformer 24. The current transformer 24 is suitably coupled to a protected circuit 26 to measure the amount of current flowing from the electrical power source 28 through the circuit breaker 20 to the protected circuit 26. The current transformers may be any suitable current sensor that outputs a signal proportional to the current flowing to the protected circuit 26. The trip unit 22 is coupled to activate a circuit breaker mechanism 30. Once activated, the mechanism 30 opens one or more pairs of contacts to interrupt the flow of current through the circuit breaker 20 and disconnect the protected circuit 26 from the power source 28. It should be appreciated that while Figure 1 illustrates a single current transformer 24, the circuit breaker 20 may include multiple current transformers 24, each associated with one of the electrical phases of the protected circuit 26.

The trip unit 22 includes a signal conditioning circuit 32 that is configured to receive a signal from the current transformer 24. The signal conditioning circuit 32 bifurcates the input signal and transmits a first signal to a primary protection controller 34 and a second signal to a secondary protection controller 36. The signal conditioning circuit may include amplifiers and filters that modify the input current signal to have characteristics suitable for use by the controllers 34, 36. In one embodiment, the first signal and the second signal may be identical. In another embodiment, the first signal and second signal may have a relationship, such as the second signal being proportional to the first signal to such a degree as to allow the correlation and comparison of the signal.

In the example embodiment, the primary protection controller 34 is a microprocessor based controller that includes a processor 38 which monitors and records the current flowing through a circuit breaker 20. The primary protection controller 34 may also include one or more amplifiers and A/D converters 40. In the example embodiment, the A/D converter may be a 16-bit device which provides an error rate of 1 - 2%. As will be discussed in more detail below, the primary protection controller 24 includes an accumulator 42. When the processor 38 detects an undesired condition, such as a high load current for example, the processor 38 accumulates a value proportional to the current I (often the square of current) over time, which is known in the industry as I²t (typically measured in terms of amp-squared-seconds), or more specifically, the integral of I²*dt over time t. If the load current exceeds a defined pickup value, the accumulator increases in value and, if a threshold is reached, the processor 38 is programmed to transmit a signal to an electromechanical tripping system 44. The electromechanical tripping system 44 includes suitable components such as an electromechanical actuator or solenoid for example, that activates the mechanism 30 to open the circuit breaker 20. In the example embodiment, the primary protection controller 34 may include but are not limited to the detection of "Long Time" Protection for distribution systems and cables, "Short Time and Instantaneous" protections for equipment and people protection, "Ground Fault and Neutral Protection" for operator and equipment safety, "Protective Relaying" to detect system overcurrent, undercurrent, current phase imbalance, over voltage, undervoltage for use commonly in motor-load applications, protections for thermal over-temperature.

The signal conditioning circuit 32 also transmits the current signal from the current transformer 24 to the secondary protection controller 36. The signal to secondary protection controller 36 is performed in parallel with the transmission of the signal to the primary protection controller 38. In the example embodiment, the secondary protection controller 36 is a microprocessor based controller having a processor 46 that monitors the signal from the signal conditioning circuit 32 and a signal from the primary protection controller 34 via a communications connection 48. In the example embodiment, the processor 46 is a low cost, limited functionality processor such as a flash based processor for example. As will be discussed in more detail below, the processor 38 monitors the current flowing to the protected circuit 26 and may transmit a signal to the electromechanical tripping system 44 in response to an undesired condition when the primary protection controller 34 does not transmit a signal within a predetermined amount of time.

In one embodiment, the secondary protection controller 36 includes an accumulator for storing data related to measured undesired conditions. In this embodiment, the processor 46 may compare the accumulator data of secondary protection controller 36 with the signal from communications connection 48 and transmit a signal to the electromechanical tripping system 44 if the comparison results in a threshold being crossed (e.g. the data from accumulator 42 deviates too much from the accumulator of the secondary protection controller 36).

In one embodiment, the secondary protection controller 36 includes a A/D converter 50. In the example embodiment, the A/D converter has a lower resolution that the A/D converter 40. In another embodiment, the A/D converter 50 is a 8 - 10 bit A/D converter. It should be appreciated that since the A/D converter 50 has a lower bit resolution than the A/D converter 40, the accuracy of the secondary protection controller will be a correspondingly lower level. In one embodiment, the A/D converter 50 operates with an error rate of 5 - 10%. In yet another embodiment, the secondary protection controller 36 includes less memory or operates at a slower speed than the primary protection controller 34. It should be appreciated that since the A/D converter 50 operates at a lower accuracy level, with less memory or at slower speeds, the manufacturing costs associated with the secondary protection controller 36 are lowered.

In response to sensing an undesired condition, a signal will be sent by the primary protection controller 34 to the electromechanical trip system 44. If the primary protection controller 34 does not transmit a signal within a predetermined amount of time, the secondary protection controller 36 transmits a signal to the electromechanical trip system 44. The length of the predetermined time that the secondary protection controller 36 waits may depend on the type, magnitude or frequency of the undesired condition and the user defined set points for protections. In an embodiment where the secondary protection controller operates at a slower speed than the primary protection controller 34, the length of predetermined time may be the time the secondary protection controller 36 takes to process the signals and determine that the undesired condition exists.

The electromechanical trip system may include an actuator 52 coupled to a latch mechanism 54. The latch mechanism 54 is connected to the circuit breaker mechanism 30. In response to receipt of the signal from the controllers 34, 36, the actuator activates moving the latch mechanism 54. The movement of the latch mechanism 54 releases the spring-loaded circuit breaker mechanism 30 allowing the contact arms 56 to open. The opening of the contact arms 56 interrupts the flow of current through the circuit breaker 20 and disconnects the protected circuit 26 from the power source 28.

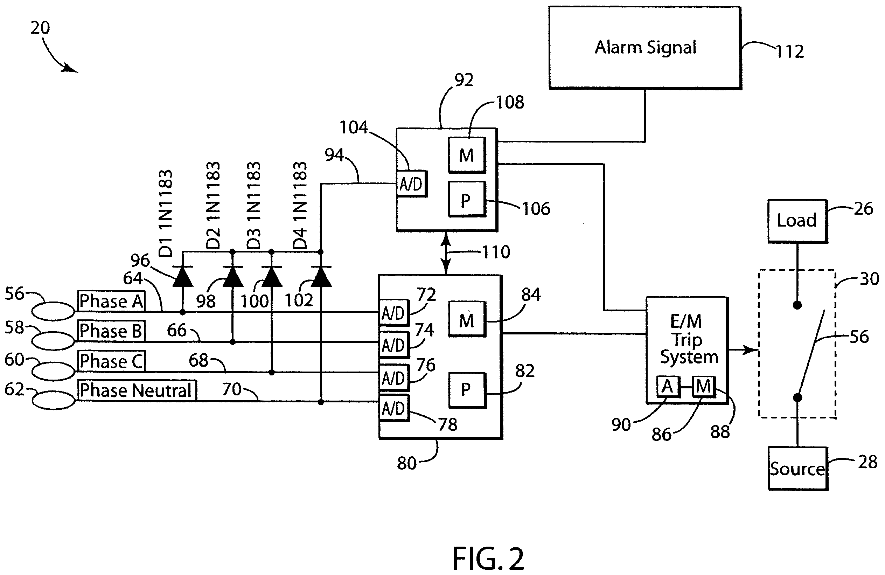

Another embodiment of a multiphase circuit breaker 20 is shown in Figure 2. In this embodiment, the circuit breaker 20 includes a connections for multiple electrical phases, such as a Phase A, Phase B, Phase C and Phase Neutral for example. The electrical phases connect the protected circuit 26 with the power source 28. For each electrical phase, there is a corresponding current transformer 56, 58, 60, 62. Electrical connections 64, 66, 68, 70 connect each of the current transformers 56, 58, 60, 62 with primary protection controller 80. The primary protection controller 80 includes a plurality of A/D converters 72, 74, 76, 78 that are arranged to receive a signal from the corresponding phase current transformer 56, 58, 60, 62 via the electrical connections 64, 66, 68, 70. In one embodiment, the A/D converters 72, 74, 76,78 are high accuracy (1 - 2% error) converters such as a 16 bit device for example. Similar to controller 34, primary protection controller 80 is a microprocessor based controller having a processor 82 and memory 84. The processor 82 receives signals from each of the phases via the A/D converters 72, 74, 76, 78 and determines if an undesired condition exists on any of the electrical phases. When an undesired condition exists, the processor 82 uses an accumulator in memory 84 to track the occurrence, magnitude, frequency and type of undesired condition.

When a predetermined threshold is crossed, the primary protection controller 80 transmits a signal to electromechanical trip system 86. It should be appreciated that the predetermined threshold may change depending on the type, magnitude or frequency of the undesired condition and the user defined set points based on application. The electromechanical tripping system 86 receives the signal and moves a latching mechanism 88 with an actuator 90, such as a solenoid for example. The activation of the latching mechanism 88 releases a spring-loaded mechanism 56 causing the contact arms 56 for each electrical phase to move from a closed to an open position. Once the contact arms 56 are in the open position, the protected circuit 26 is disconnected from the power source 28.

The circuit breaker 20 also includes a secondary protection controller 94. An electrical connection 94 connects the secondary protection controller 94 electrical connections 64, 66, 68, 70 via a plurality of blocking diodes 96, 98, 100, 102. In one embodiment, each of the blocking diodes 96, 98, 100, 102 connects one of the phase electrical connections 64, 66, 68, 70 to a single electrical connection 94. This arrangement provides advantages in that the secondary protection controller 92 may use a single A/D converter 104 for receiving signals from the current transformers 56, 58, 60, 62. It should be appreciated that manufacturing costs may be decreased by receiving the signals at a single A/D converter 104 while still allowing the secondary protection controller to distinguish the type, magnitude or frequency of the undesired condition. Thus the secondary protection controller 94 provides redundancy in detecting undesired conditions without incurring the expense of a fully redundant protection controller. In one embodiment, each of the blocking diodes 96, 98, 100, 102 are configured in series with a resistor.

The secondary protection controller 92 is a microprocessor based controller having a processor 106 and memory 108. The processor 106 monitors the signals received from A/D converter 104 for the occurrence of an undesired condition. When an undesired condition is detected, the processor 106 waits a predetermined amount of time and determines if the primary protection controller 80 has transmitted a signal to the electromechanical tripping system 86. If no signal is transmitted by the primary protection controller 92, the processor 106 proceeds to transmit a signal to the electromechanical tripping system 86, which causes the mechanism 30 to be released and the protected circuit disconnected from the power source 28.

In one embodiment, when the processor 106 transmits the first signal to the electromechanical tripping system 86, the processor 106 also transmits a second or alarm signal to an indicator 112. The indicator 112 may be a visual or audible indication at the circuit breaker, such as a light, a mechanical flag or an audio tone for example. The indicator 112 may also be within a software monitoring or control system, such as a facility management system for example. The indicator 112 may also be a self-test warning indicator, such as a light buzzer for example, disposed on the circuit breaker 20. The indicator 112 provides advantages in giving feedback to the operator that the circuit breaker 20 was opened by the secondary protection controller 92 rather than the primary protection controller 80. The operator then knows to have the circuit breaker serviced to determine why the primary protection controller 80 did not operate. In another embodiment, rather than transmitting a signal to the indicator 112, the processor 106 may record/log in internal memory (for later recall by the operator) that the primary protection controller 80 did not operate.

In another embodiment, a communications connection 110 connects the primary protection controller 80 with the secondary protection controller 92 to allow the transmission of a signal from the controller 80 accumulator. The communications connection 110 provides advantages in providing the processor 106 with access to the same stored data used by the primary processor 82. This allows the secondary processor 106 to determine when the primary protection controller 80 should have transmitted a signal to the electromechanical trip system 86. If the processor 106 determines that the primary protection controller 80 should have transmitted a signal and no signal is transmitted within a predetermined amount of time, then the secondary protection controller 92 transmits a signal to the electromechanical tripping system 86 causing the mechanism 30 to be released and the protected circuit 26 is disconnected from the power source 28. The length of the predetermined time may be determined by the type, magnitude or frequency of the undesired condition. A condition such as a short circuit for example may have a shorter predetermined time than a small over-current condition for example.

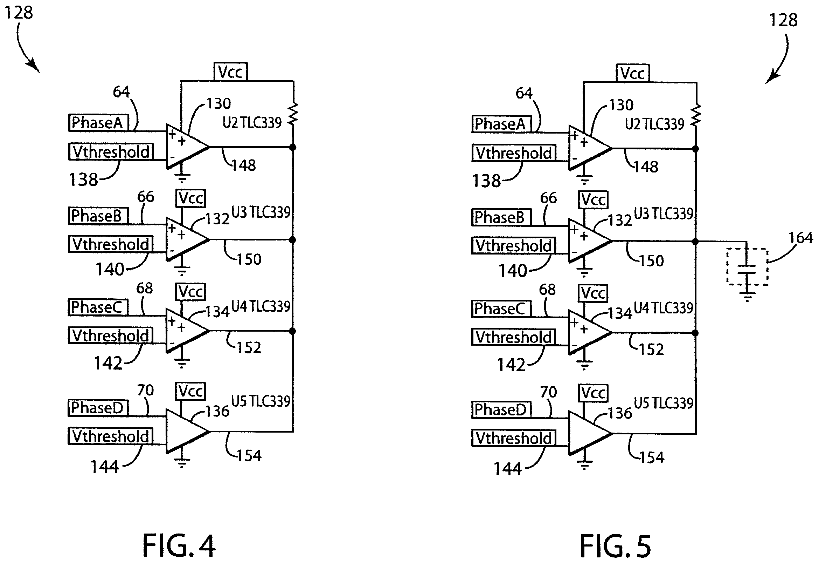

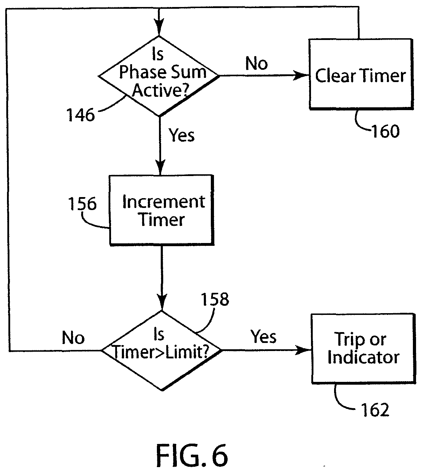

In one embodiment, the A/D converter 104 is replaced with a comparator circuit 128 shown in Figure 4 and Figure 6. In this embodiment, the comparator circuit 128 includes a plurality of comparators 130, 132, 134, 136 that are connected to receive a signal from the electrical connections 66, 66, 68, 70 respectively. Each comparator 130, 132, 134, 136 has a first input from the electrical connections 64, 66, 68, 70 and a second input 138, 140, 142, 144 representing a threshold value. Each comparator 130, 132, 134, 136 detects 146 if its first input signal is above the threshold value. If threshold value is exceeded, the comparator outputs a signal via an output 148, 150, 152, 154 and the secondary protection controller 92 determines that the Phase Sum is active. The secondary protection controller 92 then increments a timer 156 and determines 158 if the timer has exceeded a limit threshold. If the limit threshold has not been exceeded, the process loops back to determine if the comparators are still in a Phase Sum Active state. This process continues until the Phase Sum Active state is alleviated, in which case the secondary protection controller 92 clears 160 the timer, or the threshold limit has been exceeded. Once the threshold limit has been exceeded, the secondary protection controller 92 transmits 162 a signal to the electromechanical tripping system 86, the indicator 112 or both.

Another embodiment of the comparator circuit 128 is shown in Figure 5. This embodiment is similar to the comparator circuit of Figure 4 with the addition of a filter 164. The filter 164 receives the Phase Sum Active signal from the comparators 130, 132, 134, 136 and allows the signal to be transmitted to a processor 106 or to an analog circuit (not shown).

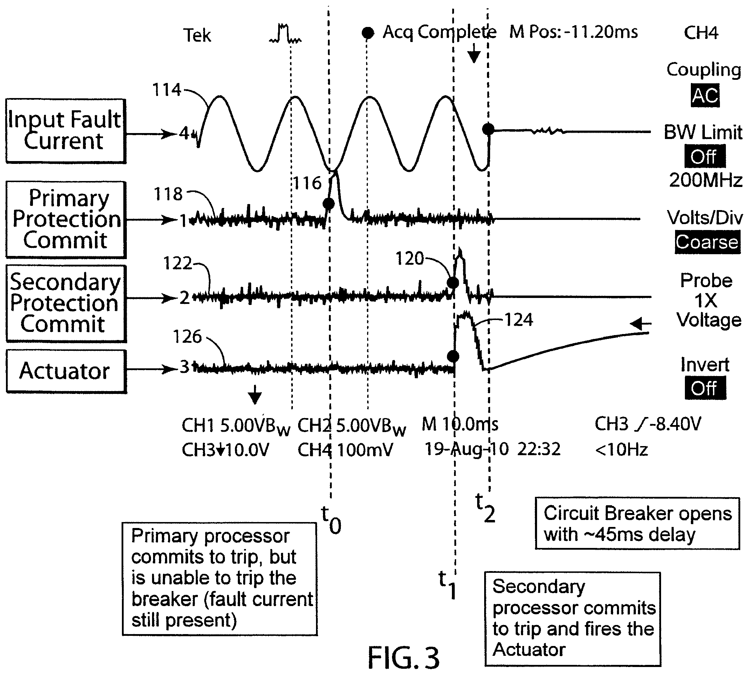

Referring to Figure 1 and Figure 2, the operation of the circuit breaker 20 will be described. Figure 3 shows signal waveforms of components of the circuit breaker 20 during an occurrence of a simulated undesired condition. The current transformer 24 transmits a fault current signal 114 to the controllers 34, 36. At to, the primary protection controller 34 detects the undesired condition and commits to trip as indicated by the spike 116 in waveform 118, which represents the output signal from the primary protection controller 34. While the primary processor 38 has committed to trip the circuit breaker 20, for some reason the signal is not transmitted to the electromechanical tripping system 44. Since the signal was not transmitted by the primary protection controller 36, the fault signal 114 is still present after time to. It should be appreciated that the output signal from the primary protection controller 34 may also represent a signal that is internal to the processor 38.

As discussed above, the secondary protection controller 36 may detect the presence of the undesired condition either via the signal from signal conditioning circuit 32, or via the signal from accumulator 42. In one embodiment, the secondary protection controller may know, via communications connection 48 for example, that the primary protection controller 34 attempted to trip the circuit breaker 20. When the secondary protection controller 36 determines that an undesired condition exists, the undesired condition is classified and a length of the predetermined time determined based on the type, magnitude or frequency of the condition and user defined set points. After the predetermined time period expires at t₁, the secondary processor commits to tripping the circuit breaker 20 as indicated by the spike 120 in waveform 122. A signal from the secondary protection controller 36 is transmitted independently from the primary protection controller 34 and is received by the electromechanical tripping system 44 causing the actuator 54 to activate as indicated by the spike 124 in waveform 126. The activation of the actuator 52 results in the circuit breaker 20 opening and the protected circuit 26 being disconnected from the power source 28 at time t₂.

It should be appreciated that while embodiments herein refer to the secondary protection controller as being less accurate than the primary protection controller, this is for example purposes and the claimed invention should not be so limited. In other embodiments, a low cost secondary protection controller is achieved by: using a slower processor, by using less memory (ROM or RAM) such that not all protection curves are included, by reducing the number of I/O connections with no customer interface and maintaining the secondary protection controller thresholds at a maximum valve, or by reducing the sampling rate.

It should further be appreciated that the circuit breaker 20 provides a number of advantages in providing a low cost redundant protection controller arrangement that allows the independent transmitting of a signal that results in the releasing of the circuit breaker mechanism and the disconnecting of the protected circuit from the power source.

An embodiment of the invention may be embodied in the form of computer-implemented processes and apparatuses for practicing those processes. The present invention may also be embodied in the form of a computer program product having computer program code containing instructions embodied in tangible media, such as floppy diskettes, CD-ROMs, hard drives, USB (universal serial bus) drives, or any other computer readable storage medium, such as random access memory (RAM), read only memory (ROM), or erasable programmable read only memory (EPROM), for example, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing the invention. When implemented on a general-purpose microprocessor, the computer program code segments configure the microprocessor to create specific logic circuits. A technical effect of the executable instructions is to open a circuit breaker in response to a signal from a second protection controller where the secondary protection controller waits a predetermined amount of time before transmitting the signal.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A trip unit (22) for a circuit breaker (20), where the circuit breaker has at least one sensor (24) configured for monitoring a current in a protected circuit (26) and has an electromechanical tripping system (44), the trip unit (22) comprising:
a first controller (34) arranged to be operably coupled to receive a current signal from the at least one sensor (24), and electrically coupled to the electromechanical tripping system (44), the first controller (34) including a first processor (38) responsive to executable computer instructions for transmitting a first signal to the electromechanical tripping system (44) in response to a detection of a first current condition; and
a second controller (36) arranged to be operably coupled in parallel with the first controller (34) to receive the current signal from the at least one sensor (24), and electrically coupled to the electromechanical tripping system (44), the second controller (36) including a second processor (46) responsive to executable computer instructions for detecting the first current condition and for classifying the first current condition and transmitting a second signal to the electromechanical tripping system (44) after a predetermined first time period from the transmitting of the first signal, where the predetermined first time period is determined by the classification of the first current condition; wherein the first processor (38) measures the current signal at a first accuracy level and the second processor (46) measures the current signal at a second accuracy level, the first accuracy level being higher than the second accuracy level.

2. The trip unit (22) of claim 1 wherein:
the first processor (38) is further responsive to executable computer instructions for transmitting the first signal to the electromechanical tripping system (44) in response to a detection of a second current condition; and
the second processor (46) is further responsive to executable computer instructions for detecting the second current condition and transmitting the second signal to the electromechanical tripping system (44) after a second time period.

3. The trip unit (22) of claim 2 wherein the first current condition is a first fault current level and the second current condition is a second fault current level.

4. The trip unit (22) of claim 1 further comprising an alarm indicator (112) electrically coupled to the second controller (92), wherein the second processor (106) is further responsive for transmitting a third signal to the alarm indicator in response to transmitting the second signal.

5. The trip unit (22) of claim 1 wherein:
the first controller (34) includes at least one first input (40) electrically coupled to the at least one sensor (24);
the second controller (36) includes at least one second input (50) electrically coupled to the at least one sensor (24); and,
a blocking diode and series resistor is disposed between the at least one sensor and the at least one second input.

6. The trip unit (22) of claim 1 wherein:
the first controller (34) further includes a first memory and the first processor (46) is further responsive to executable computer instructions for storing a first fault accumulator data in the first memory; and
the second controller (34) is coupled to communicate with the first memory and the second processor (46) is further responsive to executable computer instructions for retrieving the first fault accumulator data and determining if the first controller (34) should transmit the first signal in response to the first fault accumulator data.

7. The trip unit of claim 6 wherein:
the second processor (38) is further responsive to executable computer instructions for receiving the current signal above a predetermined threshold and waiting the predetermined first time period; and,
the second processor (38) being further responsive to transmitting the second signal in response to the current signal remaining above the predetermined threshold upon expiration of the time period.

8. The trip unit (22) of any preceding claim for a circuit breaker (20) having a plurality of sensors (24) configured for monitoring a current in a protected circuit (26), and an electromechanical tripping system (44), wherein:
the first controller (34) arranged to be electrically coupled to the plurality of sensors (24) and the electromechanical tripping system (44), the first controller (34) including a plurality of first A/D converters each disposed to receive a first signal from a respective one of the plurality of sensors (24), the primary controller (34) having a first processor and a first memory, the first processor being responsive to executable computer instructions for accumulating a first current data and storing the first current data in the first memory;
the second controller (36) arranged to be electrically coupled to the plurality of sensors (24) and the electromechanical tripping system (44), the second controller (36) including a second A/D converter disposed to receive a second signal from each of the plurality of sensors, the second controller (36) being electrically coupled to receive a third signal from the first memory, the secondary controller (36) having a second processor and a second memory, the second processor being responsive to executable computer instructions for transmitting a fourth signal to the electromechanical tripping system (44) after a predetermined first time period in response to the third signal indicating a first current condition.

9. The trip unit of claim 8 wherein the second processor is further responsive to executable computer instructions for transmitting the fourth signal after a predetermined second time period to the electromechanical tripping system (44) in response to the second controller (36) receiving the second signal indicating a second current condition.

10. The trip unit of claim 9 wherein:
the second processor is further responsive to executable computer instructions for accumulating a second fault data and storing the second fault data in the second memory, and
the second processor is further responsive to executable computer instructions for comparing the third signal to the second fault data and transmitting the fourth signal to the to the electromechanical tripping system (44) after a predetermined third time period in response to a difference between the third signal and the second fault data exceeding a threshold.

11. The trip unit of claim 10 further comprising a blocking diode and a series resistor electrically coupled between the plurality of sensors (24) and the second A/D converter.

12. The trip unit of claim 11 wherein the second processor is a flash-based microprocessor, and/or is responsive to executable computer instructions to transmit an alarm signal in response to transmitting the fourth signal.

13. A circuit breaker (20) including a trip unit (22) according to any preceding claim, at least one sensor (24) for monitoring a current in a protected circuit (26) and an electromechanical tripping system (44).

14. A method of operating a circuit breaker (20), the method comprising:
providing at least one sensor (24) configurable to monitor electric current in a protected circuit (26);
providing an electromechanical tripping system (44);
providing an electronic trip unit having a primary controller (34) and a secondary controller (36), each controller (34, 36) being operably coupled, in parallel with each other, to the at least one sensor (24) and the electromechanical tripping system (44), the primary controller (34) having a first processor (38) and the secondary controller (36) having a second processor (46);
transmitting a first signal from the at least one sensor (24) to the primary controller (34) and the secondary controller (36), the first signal being indicative of a first current condition;
detecting the first current condition with the secondary controller (36);
classifying the first current condition;
waiting a predetermined first amount of time, wherein the length of the predetermined first amount of time is determined by the classification of the first current condition;
transmitting a second signal with the secondary controller (36) to the electromechanical tripping system (44) upon expiration of the predetermined first amount of time.

15. The method of claim 14 further comprising:
receiving a third signal from the primary controller (34) at the secondary controller (36);
comparing the third signal with the first signal;
detecting a second current condition with the secondary controller (36) from the comparison of the third signal with the first signal;
waiting a predetermined second amount of time, wherein the length of the predetermined second amount of time is determined by the classification of the second current condition;
transmitting the second signal with the secondary controller (36) to the electromechanical tripping system (44) upon expiration of the predetermined second amount of time.

16. The method of claim 15 further comprising:
incrementing an accumulator (42) in response to the first signal, wherein the third signal includes a value of the accumulator (42);
determining if the primary controller (34) should have transmitted a fourth signal to the electromechanical tripping system (44); and,
determining if the primary controller (34) did not transmit the fourth signal to the electromechanical tripping system (44).

## Patentansprüche

1. Auslöseeinheit (22) für einen Schutzschalter (20), wobei der Schutzschalter wenigstens einen Sensor (24) aufweist, der dazu konfiguriert ist, einen Strom in einem geschützten Schaltkreis (26) zu überwachen, und der ein elektromechanisches Auslösesystem (44) aufweist, wobei die Auslöseeinheit (22) Folgendes umfasst:
eine erste Steuerung (34), die so angeordnet ist, dass sie wirkgekoppelt ist, um ein Stromsignal von dem wenigstens einen Sensor (24) zu empfangen, und elektrisch mit dem elektromechanischen Auslösesystem (44) gekoppelt ist, wobei die erste Steuerung (34) einen ersten Prozessor (38) beinhaltet, der auf ausführbare Computeranweisungen zum Übertragen eines ersten Signals an das elektromechanische Auslösesystem (44) als Reaktion auf eine Detektion eines ersten Stromzustands reagiert; und
eine zweite Steuerung (36), die so angeordnet ist, dass sie parallel zu der ersten Steuerung (34) wirkgekoppelt ist, um das Stromsignal von dem wenigstens einen Sensor (24) zu empfangen, und elektrisch mit dem elektromechanischen Auslösesystem (44) gekoppelt ist, wobei die zweite Steuerung (36) einen zweiten Prozessor (46) beinhaltet, der auf ausführbare Computeranweisungen zum Detektieren des ersten Stromzustands und zum Klassifizieren des ersten Stromzustands und zum Übertragen eines zweites Signals an das elektromechanische Auslösesystem (44) nach einer vorbestimmten ersten Zeitdauer nach dem Übertragen des ersten Signals reagiert, wobei die vorbestimmte erste Zeitdauer durch die Klassifizierung des ersten Stromzustands bestimmt wird;
wobei der erste Prozessor (38) das Stromsignal mit einem ersten Genauigkeitsniveau misst und der zweite Prozessor (46) das Stromsignal mit einem zweiten Genauigkeitsniveau misst, wobei das erste Genauigkeitsniveau höher als das zweite Genauigkeitsniveau ist.

2. Auslöseeinheit (22) nach Anspruch 1, wobei:
der erste Prozessor (38) ferner auf ausführbare Computeranweisungen zum Übertragen des ersten Signals an das elektromechanische Auslösesystem (44) als Reaktion auf eine Detektion eines zweiten Stromzustands reagiert; und
der zweite Prozessor (46) ferner auf ausführbare Computeranweisungen zum Detektieren des zweiten Stromzustands und zum Übertragen des zweiten Signals an das elektromechanische Auslösesystem (44) nach einer zweiten Zeitdauer reagiert.

3. Auslöseeinheit (22) nach Anspruch 2, wobei der erste Stromzustand ein erster Fehlerstrompegel ist und der zweite Stromzustand ein zweiter Fehlerstrompegel ist.

4. Auslöseeinheit (22) nach Anspruch 1, die ferner einen Alarmanzeiger (112) umfasst, der elektrisch mit der zweiten Steuerung (92) gekoppelt ist, wobei der zweite Prozessor (106) ferner als Reaktion auf das Übertragen des zweiten Signals zum Übertragen eines dritten Signals an den Alarmanzeiger reagiert.

5. Auslöseeinheit (22) nach Anspruch 1, wobei:
die erste Steuerung (34) wenigstens einen ersten Eingang (40) beinhaltet, der elektrisch mit dem wenigstens einen Sensor (24) gekoppelt ist;
die zweite Steuerung (36) wenigstens einen zweiten Eingang (50) beinhaltet, der elektrisch mit dem wenigstens einen Sensor (24) gekoppelt ist; und
eine Sperrdiode und ein Reihenwiderstand zwischen dem wenigstens einen Sensor und dem wenigstens einen zweiten Eingang angeordnet sind.

6. Auslöseeinheit (22) nach Anspruch 1, wobei:
die erste Steuerung (34) ferner einen ersten Speicher beinhaltet und der erste Prozessor (46) ferner auf ausführbare Computeranweisungen zum Speichern von ersten Fehlerakkumulatordaten in dem ersten Speicher reagiert; und
die zweite Steuerung (34) zum Kommunizieren mit dem ersten Speicher gekoppelt ist und der zweite Prozessor (46) ferner auf ausführbare Computeranweisungen zum Abrufen der ersten Fehlerakkumulatordaten und zum Bestimmen, ob die erste Steuerung (34) das erste Signal als Reaktion auf die ersten Fehlerakkumulatordaten senden sollte, reagiert.

7. Auslöseeinheit nach Anspruch 6, wobei:
der zweite Prozessor (38) ferner auf ausführbare Computeranweisungen zum Empfangen des Stromsignals oberhalb einer vorbestimmten Schwelle und zum Warten für die vorbestimmte erste Zeitdauer reagiert; und
der zweite Prozessor (38) ferner auf das Übertragen des zweiten Signals als Reaktion darauf, dass das Stromsignal beim Ablaufen der Zeitdauer oberhalb der vorbestimmten Schwelle verbleibt, reagiert.

8. Auslöseeinheit (22) nach einem der vorhergehenden Ansprüche für einen Schutzschalter (20) mit mehreren Sensoren (24), die dazu konfiguriert sind, einen Strom in einem geschützten Schaltkreis (26) zu überwachen, und einem elektromechanischen Auslösesystem (44), wobei:
die erste Steuerung (34) so angeordnet ist, dass sie elektrisch mit den mehreren Sensoren (24) und dem elektromechanischen Auslösesystem (44) gekoppelt ist, wobei die erste Steuerung (34) mehrere erste A/D-Wandler beinhaltet, die jeweils dazu eingerichtet sind, ein erstes Signal von einem jeweiligen der mehreren Sensoren (24) zu empfangen, wobei die primäre Steuerung (34) einen ersten Prozessor und einen ersten Speicher aufweist, wobei der erste Prozessor auf ausführbare Computeranweisungen zum Akkumulieren von ersten Stromdaten und zum Speichern der ersten Stromdaten in dem ersten Speicher reagiert;
die zweite Steuerung (36) so angeordnet ist, dass sie elektrisch mit den mehreren Sensoren (24) und dem elektromechanischen Auslösesystem (44) gekoppelt ist, wobei die zweite Steuerung (36) einen zweiten A/D-Wandler beinhaltet, der dazu eingerichtet ist, ein zweites Signal von jedem der mehreren Sensoren zu empfangen, wobei die zweite Steuerung (36) elektrisch gekoppelt ist, um ein drittes Signal von dem ersten Speicher zu empfangen, wobei die zweite Steuerung (36) einen zweiten Prozessor und einen zweiten Speicher aufweist, wobei der zweite Prozessor auf ausführbare Computeranweisungen zum Übertragene eines vierten Signals an das elektromechanische Auslösesystem (44) nach einer vorbestimmten ersten Zeitdauer als Reaktion darauf, dass das dritte Signal einen ersten Stromzustand anzeigt, reagiert.

9. Auslöseeinheit nach Anspruch 8, wobei der zweite Prozessor ferner auf ausführbare Computeranweisungen zum Übertragen des vierten Signals an das elektromechanische Auslösesystem (44) nach einer vorbestimmten zweiten Zeitdauer als Reaktion darauf, dass die zweite Steuerung (36) das zweite Signal empfängt, das einen zweiten Stromzustand anzeigt, reagiert.

10. Auslöseeinheit nach Anspruch 9, wobei:
der zweite Prozessor ferner auf ausführbare Computeranweisungen zum Akkumulieren von zweiten Fehlerdaten und zum Speichern der zweiten Fehlerdaten in dem zweiten Speicher reagiert, und
der zweite Prozessor ferner auf ausführbare Computeranweisungen zum Vergleichen des dritten Signals mit den zweiten Fehlerdaten und zum Übertragen des vierten Signals an das elektromechanische Auslösesystem (44) nach einer vorbestimmten dritten Zeitdauer als Reaktion darauf, dass eine Differenz zwischen dem dritten Signal und den zweiten Fehlerdaten eine Schwelle überschreitet, reagiert.

11. Auslöseeinheit nach Anspruch 10, die ferner eine Sperrdiode und einen Reihenwiderstand umfasst, die elektrisch zwischen die mehreren Sensoren (24) und den zweiten A/D-Wandler gekoppelt sind.

12. Auslöseeinheit nach Anspruch 11, wobei der zweite Prozessor ein Flash-basierter Mikroprozessor ist und/oder auf ausführbare Computeranweisungen zum Übertragen eines Alarmsignals als Reaktion auf das Übertragen des vierten Signals reagiert.

13. Schutzschalter (20), der eine Auslöseeinheit (22) nach einem der vorhergehenden Ansprüche, wenigstens einen Sensor (24) zum Überwachen eines Stroms in einem geschützten Schaltkreis (26) und ein elektromechanisches Auslösesystem (44) beinhaltet.

14. Verfahren zum Betreiben eines Schutzschalters (20), wobei das Verfahren Folgendes umfasst:
Bereitstellen von wenigstens einem Sensor (24), der zum Überwachen eines elektrischen Stroms in einem geschützten Schaltkreis (26) konfigurierbar ist;
Bereitstellen eines elektromechanischen Auslösesystems (44) ;
Bereitstellen einer elektronischen Auslöseeinheit mit einer primären Steuerung (34) und einer sekundären Steuerung (36), wobei jede Steuerung (34, 36) parallel zueinander mit dem wenigstens einen Sensor (24) und dem elektromechanischen Auslösesystem (44) wirkgekoppelt ist, wobei die primäre Steuerung (34) einen ersten Prozessor (38) aufweist und die sekundäre Steuerung (36) einen sekundären Prozessor (46) aufweist;
Übertragen eines ersten Signals von dem wenigstens einen Sensor (24) an die primäre Steuerung (34) und die sekundäre Steuerung (36), wobei das erste Signal einen ersten Stromzustand anzeigt;
Detektieren des ersten Stromzustands mit der zweiten Steuerung (36);
Klassifizieren des ersten Stromzustands;
Warten für eine vorbestimmte erste Zeitmenge, wobei die Länge der vorbestimmten ersten Zeitmenge durch die Klassifizierung des ersten Stromzustands bestimmt wird;
Übertragen eines zweiten Signals mit der zweiten Steuerung (36) an das elektromechanische Auslösesystem (44) beim Ablaufen der vorbestimmten ersten Zeitmenge.

15. Verfahren nach Anspruch 14, das ferner Folgendes umfasst:
Empfangen eines dritten Signals von der primären Steuerung (34) an der sekundären Steuerung (36);
Vergleichen des dritten Signals mit dem ersten Signal;
Detektieren eines zweiten Stromzustands mit der sekundären Steuerung (36) aus dem Vergleich des dritten Signals mit dem ersten Signal;
Warten für eine vorbestimmte zweite Zeitmenge, wobei die Länge der vorbestimmten zweiten Zeitmenge durch die Klassifizierung des zweiten Stromzustands bestimmt wird;
Übertragen des zweiten Signals mit der zweiten Steuerung (36) an das elektromechanische Auslösesystem (44) beim Ablaufen der vorbestimmten zweiten Zeitmenge.

16. Verfahren nach Anspruch 15, das ferner Folgendes umfasst:
Erhöhen eines Akkumulators (42) als Reaktion auf das erste Signal, wobei das dritte Signal einen Wert des Akkumulators (42) beinhaltet;
Bestimmen, ob die primäre Steuerung (34) ein viertes Signal an das elektromechanische Auslösesystem (44) übertragen haben sollte; und
Bestimmen, ob die primäre Steuerung (34) das vierte Signal nicht an das elektromechanische Auslösesystem (44) übertragen hat.

## Revendications

1. Unité de déclenchement (22) pour disjoncteur (20), le disjoncteur ayant au moins un capteur (24) conçu pour surveiller un courant dans un circuit protégé (26) et ayant un système de déclenchement électromécanique (44), l'unité de déclenchement (22) comprenant :
un premier contrôleur (34) conçu pour être couplé de manière fonctionnelle afin de recevoir un signal de courant en provenance de l'au moins un capteur (24), et couplé électriquement au système de déclenchement électromécanique (44), le premier contrôleur (34) comprenant un premier processeur (38) réactif à des instructions informatiques exécutables afin de transmettre un premier signal au système de déclenchement électromécanique (44) en réponse à une détection d'une première condition de courant ; et
un second contrôleur (36) conçu pour être couplé de manière fonctionnelle en parallèle au premier contrôleur (34) afin de recevoir le signal de courant en provenance de l'au moins un capteur (24), et couplé électriquement au système de déclenchement électromécanique (44), le second contrôleur (36) comprenant un second processeur (46) réactif à des instructions informatiques exécutables afin de détecter la première condition de courant et de classer la première condition de courant et transmettre un deuxième signal au système de déclenchement électromécanique (44) après une première période de temps prédéterminée à partir de la transmission du premier signal, la première période de temps prédéterminée étant déterminée par le classement de la première condition de courant ;
le premier processeur (38) mesurant le signal de courant à un premier niveau de précision, et le second processeur (46) mesurant le signal de courant à un second niveau de précision, le premier niveau de précision étant supérieur au second niveau de précision.

2. Unité de déclenchement (22) selon la revendication 1, dans laquelle :
le premier processeur (38) est en outre réactif à des instructions informatiques exécutables afin de transmettre le premier signal au système de déclenchement électromécanique (44) en réponse à une détection d'une seconde condition de courant ; et
le second processeur (46) étant en outre réactif à des instructions informatiques exécutables afin de détecter la seconde condition de courant et transmettre le deuxième signal au système de déclenchement électromécanique (44) après une deuxième période de temps.

3. Unité de déclenchement (22) selon la revendication 2, dans laquelle la première condition de courant est un premier niveau de courant d'anomalie et la seconde condition de courant est un second niveau de courant d'anomalie.

4. Unité de déclenchement (22) selon la revendication 1, comprenant en outre un indicateur d'alarme (112) couplé électriquement au second contrôleur (92), le second processeur (106) étant en outre réactif afin de transmettre un troisième signal à l'indicateur d'alarme en réponse à la transmission du deuxième signal.

5. Unité de déclenchement (22) selon la revendication 1, dans laquelle :
le premier contrôleur (34) comprend au moins une première entrée (40) couplée électriquement à l'au moins un capteur (24) ;
le second contrôleur (36) comprend au moins une seconde entrée (50) couplée électriquement à l'au moins un capteur (24) ; et,
une diode de blocage et une résistance série sont disposées entre l'au moins un capteur et l'au moins une seconde entrée.

6. Unité de déclenchement (22) selon la revendication 1, dans laquelle :
le premier contrôleur (34) comprend en outre une première mémoire, et le premier processeur (46) est en outre réactif à des instructions informatiques exécutables afin de stocker des premières données d'accumulateur d'anomalie dans la première mémoire ; et
le second contrôleur (34) est couplé pour communiquer avec la première mémoire, et le second processeur (46) est en outre réactif à des instructions informatiques exécutables afin de récupérer les premières données d'accumulateur d'anomalie et déterminer si le premier contrôleur (34) doit transmettre le premier signal en réponse aux premières données d'accumulateur d'anomalie.

7. Unité de déclenchement selon la revendication 6, dans laquelle :
le second processeur (38) est en outre réactif à des instructions informatiques exécutables afin de recevoir le signal de courant au-dessus d'un seuil prédéterminé et attendre la première période de temps prédéterminée ; et
le second processeur (38) est en outre réactif au transmettre le deuxième signal en réponse au signal de courant restant au-dessus du seuil prédéterminé à l'expiration de la période de temps.

8. Unité de déclenchement (22) selon l'une quelconque des revendications précédentes pour disjoncteur (20) ayant une pluralité de capteurs (24) conçus pour surveiller un courant dans un circuit protégé (26), et ayant un système de déclenchement électromécanique (44), dans laquelle :
le premier contrôleur (34) est conçu pour être couplé électriquement à la pluralité de capteurs (24) et au système de déclenchement électromécanique (44), le premier contrôleur (34) comprenant une pluralité de premiers convertisseurs A/N disposés chacun de manière à recevoir un premier signal en provenance d'un capteur respectif de la pluralité de capteurs (24), le premier contrôleur (34) ayant un premier processeur et une première mémoire, le premier processeur étant réactif à des instructions informatiques exécutables afin d'accumuler des premières données de courant et stocker les premières données de courant dans la première mémoire ;
le second contrôleur (36) est conçu pour être couplé électriquement à la pluralité de capteurs (24) et au système de déclenchement électromécanique (44), le second contrôleur (36) comprenant un second convertisseur A/N disposé de manière à recevoir un deuxième signal en provenance de chaque capteur de la pluralité de capteurs, le second contrôleur (36) étant couplé électriquement afin de recevoir un troisième signal en provenance de la première mémoire, le second contrôleur (36) ayant un second processeur et une seconde mémoire, le second processeur étant réactif à des instructions informatiques exécutables afin de transmettre un quatrième signal au système de déclenchement électromécanique (44) après une première période de temps prédéterminée en réponse au troisième signal indiquant une première condition de courant.

9. Unité de déclenchement selon la revendication 8, dans laquelle le second processeur est en outre réactif à des instructions informatiques exécutables afin de transmettre le quatrième signal après une deuxième période de temps prédéterminée au système de déclenchement électromécanique (44) en réponse à la réception par le second contrôleur (36) du second signal indiquant une seconde condition de courant.

10. Unité de déclenchement selon la revendication 9, dans laquelle :
le second processeur est en outre réactif à des instructions informatiques exécutables afin d'accumuler des secondes données d'anomalie et stocker les secondes données d'anomalie dans la seconde mémoire, et
le second processeur est en outre réactif à des instructions informatiques exécutables afin de comparer le troisième signal aux secondes données d'anomalie et transmettre le quatrième signal au système de déclenchement électromécanique (44) après une troisième période de temps prédéterminée en réponse à une différence entre le troisième signal et les secondes données d'anomalie dépassant un seuil.

11. Unité de déclenchement selon la revendication 10, comprenant en outre une diode de blocage et une résistance série couplées électriquement entre la pluralité de capteurs (24) et le second convertisseur A/N.

12. Unité de déclenchement selon la revendication 11, dans laquelle le second processeur est un microprocesseur de type Flash, et/ou est réactif à des instructions informatiques exécutables afin de transmettre un signal d'alarme en réponse à la transmission du quatrième signal.

13. Disjoncteur (20) comprenant une unité de déclenchement (22) selon l'une quelconque des revendications précédentes, au moins un capteur (24) pour surveiller un courant dans un circuit protégé (26), et un système de déclenchement électromécanique (44).

14. Procédé de fonctionnement d'un disjoncteur (20), le procédé consistant à :
fournir au moins un capteur (24) conçu pour surveiller un courant électrique dans un circuit protégé (26) ;
fournir un système de déclenchement électromécanique (44) ;
fournir une unité de déclenchement électronique comprenant un contrôleur principal (34) et un contrôleur secondaire (36), chaque contrôleur (34, 36) étant couplé de manière fonctionnelle, en parallèle l'un avec l'autre, à l'au moins un capteur (24) et au système de déclenchement électromécanique (44), le contrôleur principal (34) ayant un premier processeur (38) et le contrôleur secondaire (36) ayant un second processeur (46) ;
transmettre un premier signal en provenance de l'au moins un capteur (24) au contrôleur principal (34) et au contrôleur secondaire (36), le premier signal étant révélateur d'une première condition de courant ;
détecter la première condition de courant avec le contrôleur secondaire (36) ;
classer la première condition de courant ;
attendre une première période de temps prédéterminée, la durée de la première période prédéterminée étant déterminée par le classement de la première condition de courant ;
transmettre un deuxième signal avec le contrôleur secondaire (36) au système de déclenchement électromécanique (44) à l'expiration de la première période de temps prédéterminée.

15. Procédé selon la revendication 14, consistant en outre à :
recevoir un troisième signal en provenance du contrôleur principal (34) au niveau du contrôleur secondaire (36) ;
comparer le troisième signal au premier signal ;
détecter une seconde condition de courant avec le contrôleur secondaire (36) à partir de la comparaison du troisième signal au premier signal ;
attendre une deuxième période de temps prédéterminée, la durée de la deuxième période prédéterminée étant déterminée par le classement de la seconde condition de courant ;
transmettre le deuxième signal avec le contrôleur secondaire (36) au système de déclenchement électromécanique (44) à l'expiration de la deuxième période de temps prédéterminée.

16. Procédé selon la revendication 15, consistant en outre à :
incrémenter un accumulateur (42) en réponse au premier signal, le troisième signal comprenant une valeur de l'accumulateur (42) ;
déterminer si le contrôleur principal (34) aurait dû transmettre un quatrième signal au système de déclenchement électromécanique (44) ; et
déterminer si le contrôleur principal (34) n'a pas transmis le quatrième signal au système de déclenchement électromécanique (44).
